**Europäisches Patentamt**

**European Patent Office**

**Office européen des brevets**

(19)

(11) Veröffentlichungsnummer: **0 209 945**
**B1**

## EUROPÄISCHE PATENTSCHRIFT

(12)

(45) Veröffentlichungstag der Patentschrift:
28.12.88

(51) Int. Cl.⁴: **C 03 B 37/018**

(21) Anmeldenummer: **86201236.6**

(22) Anmeldetag: **15.07.86**

(54) **Verfahren zur Herstellung von Lichtleitfasern.**

(30) Priorität: **20.07.85 DE 3525979**

(43) Veröffentlichungstag der Anmeldung:
**28.01.87 Patentblatt 87/5**

(45) Bekanntmachung des Hinweises auf die Patenterteilung:
**28.12.88 Patentblatt 88/52**

(84) Benannte Vertragsstaaten:
**CH DE FR GB IT LI NL SE**

(56) Entgegenhaltungen:
**EP-A- 0 187 405**
**FR-A- 2 380 996**
**GB-A- 2 118 165**

(73) Patentinhaber: **Philips Patentverwaltung GmbH,**
**Wendenstrasse 35 Postfach 10 51 49,**
**D-2000 Hamburg 1 (DE)**

(84) Benannte Vertragsstaaten: **DE**

(73) Patentinhaber: **N.V. Philips' Gloeilampenfabrieken,**
**Groenewoudseweg 1, NL-5621 BA Eindhoven (NL)**

(84) Benannte Vertragsstaaten: **CH FR GB IT LI NL SE**

(72) Erfinder: **Geittner, Peter, Dr., Hainbuchenstrasse 19A,**
**D-5100 Aachen (DE)**
Erfinder: **Hagemann, Hans-Jürgen, Dr.,**
**Leo-Blech-Strasse 7, D-5100 Aachen (DE)**
Erfinder: **Warnier, Jacques, M.L. Kingstrasse 18,**
**NL-6245 GJ Eijsden (NL)**

(74) Vertreter: **Plegler, Harald, Dipl.-Chem. et al, Philips**
**Patentverwaltung GmbH**
**Wendenstrasse 35 Postfach 10 51 49,**
**D-2000 Hamburg 1 (DE)**

**Beschreibung**

Die Erfindung betrifft ein Verfahren zur Herstellung von Lichtleitfasern, bei dem auf der Innenwandung eines auf eine Temperatur zwischen 1100 und 1300°C erwärmten Glasrohres schichtweise Glas abgeschieden wird, indem ein reaktives Gasgemisch bei einem Druck zwischen 1 und 30 hPa von einer Gaseintrittsseite aus durch das Glasrohr geleitet wird, während im Innern des Glasrohres ein Plasma zwischen zwei Umkehrpunkten hubweise hin- und herbewegt wird, wonach das Glasrohr, nachdem eine dem beabsichtigten Lichtleiterfaseraufbau entsprechende Menge Glas abgeschieden worden ist, zum Kollabieren gebracht wird, um eine massive Vorform zu bilden, von der Lichtleitfasern gezogen werden.

Solch ein Verfahren ist aus der EP-A2-0 187 405 bekannt. Diese Patentanmeldung ist veröffentlicht am 16.07.86 und fällt daher unter Artikel 54(3) EPÜ. Bei diesem Verfahren gemäss EP-A2-0 187 405 wird das Plasma im Bereich mindestens eines Umkehrpunktes zeitlich nicht linear bewegt.

Unter «Glasrohr» ist in diesem Zusammenhang ein Substratrohr oder Beschichtungsrohr zu verstehen, das entweder aus synthetisch hergestelltem oder aus aus Quarzkristallen durch Schmelzen hergestelltem amorphem Quarz (Schmelzkieselsäure, Quarzglas), der gegebenenfalls dotiert ist, besteht, oder das sowohl aus synthetisch hergestelltem als auch aus aus Quarzkristallen durch Schmelzen hergestelltem amorphem Quarz (Schmelzkieselsäure, Quarzglas), der gegebenenfalls dotiert ist, besteht.

Mit dem zuvor angegebenen Verfahren sind sowohl Gradientenindexfasern als auch Stufenindexfasern herstellbar, wobei dem jeweiligen Faseraubau entsprechende Mengen Glas abgeschieden werden.

Die Herstellung von Lichtleitfasern bzw. optischen Wellenleitern nach dem zuvor angegebenen Verfahren ist u.a. aus US-E-30 635 und US-A-4 314 833 bekannt. Diese Herstellungsweise wird in der Praxis als «nichtisothermes Plasma-CVD-Verfahren» (nichtisothermes PCVD-Verfahren, wobei P = Plasma und CVD = Chemical Vapour Deposition = reaktive Abscheidung aus der Gasphase) bezeichnet. Bei diesem Verfahren werden aus der Gasphase Glasschichten direkt auf der Innenwandung des Glasrohres abgeschieden (heterogene Reaktion). Hierbei wird die Bildung von Glasruss in der Gasphase vermieden; dies ist insbesondere in US-A-4 314 833 näher beschrieben.

Der wesentliche Unterschied zwischen dem PCVD-Verfahren und dem ebenfalls zur Herstellung von Lichtleitfasern durch Innenbeschichtung eines Rohres angewendeten MCVD-Verfahren liegt in der Art und Weise, wie die für die Abscheidung der Glaskomponenten notwendigen chemischen Reaktionen angeregt werden: Während das MCVD-Verfahren von thermischen Anregungen durch einen Brenner ausgeht, nutzt das PCVD-Verfahren Elektronenstossanregungen aus. Beim MCVD-Verfahren entstehen im wesentlichen primär feine Staubteilchen (Glasruss), deren Abscheidung im Temperatur- und Schwerefeld entlang des Rohres über einem ausgedehnten Bereich, und über dem Rohrumfang nur dann gleichmässig erfolgt, wenn das Rohr rotiert wird; zur Erzielung kompakter Schichten muss das abgeschiedene Material nachträglich gesintert werden. Im Gegensatz hierzu tritt bei der Elektronenstossanregung des PCVD-Verfahrens die Bildung feiner Staubteilchen nicht ein; vielmehr liegen die gasförmigen Reaktionspunkte in molekularer Form vor und können über relativ schnelle Diffusion zur Innenwand des normalerweise benutzten $SiO_2$-Rohres gelangen und dort auch kondensieren. Demzufolge ist die Abscheidung eng lokalisiert und über dem Rohrumfang gleichmässig; eine nachträgliche Sinterung ist nicht nötig. Das ist auch der Grund dafür, dass beim PCVD-Verfahren in beiden Bewegungsrichtungen des Plasmas Glas abgeschieden werden kann, während beim MCVD-Verfahren nur in einer Richtung, und zwar in der Strömungsrichtung der reaktiven Gase, Glasteilchen abgeschieden werden können.

Die Wirtschaftlichkeit beider technologischer Verfahren zur Herstellung von Vorformen für optische Lichtleitfasern wird entscheidend durch die verfahrensspezifisch erreichbaren Ausbeuten bestimmt. Wesentliche Parameter sind in diesem Zusammenhang die Reproduzierbarkeit der Verfahrensführung, die chemische Reaktionsausbeute, die Abscheidungsgeschwindigkeit und die optische und geometrische Homogenität des abgeschiedenen Materials über der Vorformlänge.

Aufgrund der speziellen Reaktions- und Abscheidungsmechanismen erlaubt das PCVD-Verfahren die Herstellung optisch hochwertiger Vorformen mit hoher Reproduzierbarkeit, Reaktionsausbeuten nahe 100% und im Vergleich zu anderen Verfahren geringen Anfangstaperverlusten. Unter einem Anfangstaper ist ein Abscheidungsbereich mit nicht ausreichend konstanten optischen und geometrischen Eigenschaften am Vorformanfang, d.h. an der Gaseintrittsseite, zu verstehen. Der homogene Bereich zwischen dem Anfangstaper und einem entsprechenden Bereich am Vorformende wird im folgenden als Plateaubereich bezeichnet.

Da der Transport zur Rohrwand beim PCVD-Verfahren durch schnelle, molekulare Diffusionsmechanismen bestimmt wird, ist die Ausdehnung der Abscheidung in Längsrichtung des Substratrohres naturgemäss eng begrenzt; homogene Plateaubereiche ergeben sich dadurch, dass die Reaktionszone mit konstanter Geschwindigkeit in Längsrichtung des Rohres hin- und herbewegt wird und die für die Hubumkehr notwendigen Bereiche nichtkonstanter Geschwindigkeit an den Vorformenden so klein wie möglich gewählt werden.

Diese Bedingungen führen beim PCVD-Verfahren bei Abscheideraten von etwa 0,5 g/min und Vorformlängen von etwa 70 cm zu niedrigen relativen Ausbeuteverlusten durch Taper von etwa 15%, d.h. zu einer Taperlänge von etwa 10 cm. Die Taperlänge wird dabei aus praktischen Gründen als der Abstand zwischen den Orten, an denen die lokale Belegung mit abgeschiedenem Glas 10% und 90% des Maximalwertes im Plateaubereich beträgt, definiert.

Aufgrund der unterschiedlichen Reaktions- und Transportmechanismen liegen beim MCVD-Verfahren völlig andere Verhältnisse vor, die — insbesondere wegen der Bildung von Glasruss durch eine homogene Gasphasenreaktion — zu in Längsrichtung des Rohres ausgedehnten Abscheidungsverteilungen führen und damit zusätzliche Massnahmen zur Reaktion von Taperverlusten erforderlich machen.

Aus GB-A-2 118 165 ist als Massnahme zur Taperreduktion beim MCVD-Verfahren eine variable Geschwindigkeit des Brenners entlang des Rohres, d.h. eine nichtlineare Bewegung auf mechanische Weise bekannt. Die Art der Bewegung wird dabei in Abhängigkeit von der jeweiligen spezifischen Abscheidungsfunktion vorgegeben, die beim MCVD-Verfahren komplex von allen Abscheidungsparametern abhängt und mit einem Iterationsverfahren experimentell für die speziell vorliegenden Abscheidungsbedingungen ermittelt werden muss. In allen Fällen ist eine spezielle nichtlineare Bewegungsform über der gesamten Hublänge erforderlich. Unter «Hublänge» ist die Strecke zwischen den Umkehrpunkten des Brenners zu verstehen.

Andere Möglichkeiten der Taperreduktion, z.B. Flussänderungen oder lineare mechanische Rampen, worunter eine Verlangsamung der Brennergeschwindigkeit an der Gaseintrittsseite zu verstehen ist, werden zwar diskutiert, aber für kaum durchführbar bzw. in ihrer Wirkung nicht ausreichend beurteilt. Der Grund dafür — und demzufolge für die obengenannten speziellen Massnahmen — ist im MCVD-Verfahren selbst zu finden, und zwar wegen folgender spezifischer Eigenschaften dieses Verfahrens:

— Die Partikelgrössenverteilung und das Einbauverhalten für $SiO_2$ und Dotierungen hängen beim MCVD-Verfahren wegen des thermischen Reaktionsablaufs mit Glasrussbildung in ausserordentlich komplexer Weise von sämtlichen Verfahrensparametern ab; demzufolge kann die Abscheidungsfunktion hier nur experimentell bestimmt — nicht aber quantitativ theoretisch berechnet — werden.

— Die Glasrussbildung, die mit Abscheidungsausbeuten für $SiO_2$ verbunden ist, die unter 100% liegen, führt dazu, dass die Ausdehnung der Abscheidung beim MCVD-Verfahren grösser als die Hublänge längs des Rohres ist, d.h. Glasruss tritt in grösserem Umfang auch noch aus dem Rohrende aus. Als Konsequenz daraus muss zur Erzielung einigermassen konstanter Schichtdicken der Brenner über der gesamten Hublänge nichtlinear bewegt werden; ein homogener Plateaubereich im eigentlichen Sinne existiert beim MCVD-Verfahren nicht.

— Eine Variation anderer Verfahrensparameter als der Brennergeschwindigkeit zur Taperreduktion ändert — wiederum infolge des komplexen Einbau-, Ausbeute- und Staubteilchengrössenverhaltens — direkt das Abscheidungsprofil bzw. die Abscheidefunktion, den Dotierungseinbau und die Ausbeuten — und zwar gleichzeitig. Derartige Variationen sind demzufolge beim MCVD-Verfahren schwer kontrollierbar und nicht ohne negative Auswirkungen auf die optische Qualität und Homogenität durchführbar.

Wie den vorangehenden Ausführungen über den Stand der Technik entnommen werden kann, bietet das PCVD-Verfahren bezüglich der Taperverluste verfahrensintrinsische Vorteile, die die beim MCVD-Verfahren angewendeten aufwendigen und problematischen Massnahmen zur Taperreduktion und zur Erzielung homogener Plateaubereiche in den Vorformen nicht erforderlich machen.

Dennoch ist es auch beim PCVD-Verfahren wünschenswert, die Taperverluste weiter zu reduzieren und damit die Verfahrensausbeuten weiter zu erhöhen. Insbesondere ist anzustreben, dass auch bei einer Erhöhung der Abscheidungsraten auf Werte oberhalb 0,5 g/min unter den dann vorliegenden Verfahrensbedingungen die relativen Taperverluste möglichst klein (d.h. typischerweise < 10% der Vorformlänge) gehalten werden können.

Aufgabe der Erfindung ist es daher, Massnahmen anzugeben, mit denen bei der Herstellung optischer Vorformen nach dem PCVD-Verfahren die Bereiche nichtkonstanter Abscheidungsgeometrie am Vorformanfang (Geometrietaper) möglichst effektiv reduziert werden, die aber keine negativen Auswirkungen auf die optische Qualität der Vorformen und auf die hohen Reaktionsausbeuten haben.

Diese Aufgabe wird erfindungsgemäss dadurch gelöst, dass die Hin- und Herbewegung des Plasmas am Umkehrpunkt auf der Gaseintrittsseite unterbrochen wird, wobei die Dauer dieser Unterbrechung für eine effektive Reduktion von Anfangstaperverlusten bemessen wird.

Die Erfindung beruht auf dem experimentellen Befund, dass eine Unterbrechung der Bewegung der Reaktionszone nach der Abbremsung und vor der Beschleunigung in umgekehrter Richtung am vorderen Umkehrpunkt, d.h. an der Gaseintrittsseite, in überraschender Weise und im Gegensatz zu der bisherigen Annahme, dass eine sofortige Umkehr notwendig sei, dazu führt, dass der Anfangstaperbereich deutlich verkürzt wird. Voraussetzung dafür ist allerdings, dass die Dauer der Unterbrechung unter den jeweiligen Abscheidebedingungen ausreichend bemessen wird.

Beim PCVD-Verfahren nimmt die Ausdehnung des lokalen Abscheidungsprofils und damit die Länge des Anfangstapers linear mit dem totalen Gasfluss durch das zu beschichtende Rohr zu. Unter «lokalem Abscheidungsprofil» ist in diesem Zusammenhang die Verteilung des abgeschiedenen Glases längs des Glasrohres zu verstehen, die sich bei festgehaltener Position des Plasmas ausbilden würde. Da es sich experimentell herausgestellt hat, dass auch die optimale Unterbrechungsdauer linear mit dem totalen Gasfluss steigt, ist es vorteilhaft, mit möglichst niedrigen totalen Gasflüssen zu beschichten, wenn die Unterbrechungsdauern so kurz wie möglich sein sollen. Bei einer vorgegebenen Abscheiderate darf der totale Gasfluss einen bestimmten, durch die Reaktionsmechanismen vorgegebenen Wert natürlich nicht unterschreiten.

Die Dauer der Unterbrechung beträgt vorzugsweise mindestens 0,1 Sekunde. Dies hängt damit zusammen, dass bei kürzerer Unterbrechungszeiten die erfindungsgemässe Wirkung einer Taperreduktion gering ist und demzufolge die Anwendung der erfindungsgemässen Massnahme beim PCVD-Verfahren keine wesentlichen Verbesserungen bewirkt. Die Dauer der Unterbrechung von vorzugsweise mindestens 0,1s ist damit länger zu bemessen als die Zeiten, die von den Vorrichtungsteilen, die das Hin-und Herbewegen des Plasmas bewerkstelligen, für das Umschalten von einer Bewegungsrichtung in die andere benötigt werden. Diese Zeiten betragen in der Praxis weniger als 0,1 Sekunde.

Eine bevorzugte Ausführungsform des erfindungsgemässen Verfahrens besteht darin, dass zur Erzeugung des Plasmas ein Mikrowellenresonator verwendet wird, dessen Bewegung am vorderen Umkehrpunkt für ein Zeitintervall $\triangle t_o$ entsprechend der Beziehung

$$0,008 \cdot \left[ \frac{\dot{Q}_T/\text{sccm}}{v_o/\text{cm s}^{-1}} \right] \leqq \left[ \frac{\triangle t_o}{s} \right] \leqq 0,01 \cdot \left[ \frac{\dot{Q}_T/\text{sccm}}{v_o/\text{cm s}^{-1}} \right] \quad (1)$$

unterbrochen wird, wobei

$\dot{Q}_T$ der totale Gasfluss in sccm (Kubikzentimeter pro Minute, bezogen auf Standardbedingungen von 273 K und 1013 hPa) und

$v_o$ die Resonatorgeschwindigkeit im Plateaubereich in Zentimeter pro Sekunde

bedeuten.

Nach einer weiteren bevorzugten Ausführungsform wird das erfindungsgemässe Verfahren mit einem Verfahren kombiniert, das in der EP-A2-0 187 405 vorgeschlagen worden ist. Bei diesem Verfahren wird das Plasma im Bereich mindestens eines Umkehrpunktes zeitlich nichtlinear bewegt und/oder in seiner Ausdehnung in Längsrichtung des Glasrohrs zeitlich verändert.

Der Bereich, in dem das Plasma nichtlinear bewegt wird, entspricht vorzugsweise weniger als 2% der gesamten Hublänge, wobei unter «Hublänge» die Strecke zwischen den Umkehrpunkten des Plasmas zu verstehen ist.

Zusätzlich werden bei einer vorgegebenen Hublänge für das Plasma die Gasflüsse vorzugsweise entsprechend der Beziehung

$$2,65 \leqq \left[ \frac{\dot{Q}_T}{\dot{Q}_{SiCl_4}} \right] \cdot \left[ \frac{\dot{m}_{SiO_2}}{\text{g/min}} \right] \leqq 7,25 \left[ \frac{z_p}{m} \right] \quad (2)$$

eingestellt wobei

$\dot{Q}_T$ und $\dot{Q}_{SiCl_4}$ den totalen Gasfluss und den Gasfluss von SiO$_2$-bildenden Chloriden in sccm,

$\dot{m}_{SiO_2}$ die Abscheiderate von SiO$_2$ in Gramm pro Minute und

$z_p$ die Hublänge in m

bedeuten und $\dot{Q}_T$ im Gültigkeitsbereich der Beziehung (2) einen möglichst niedrigen Wert haben sollte. $\dot{Q}_T/\dot{Q}_{SiCl_4}$ ist dabei vorzugsweise $\geqq 3$ zu wählen, um eine quantitative Reaktionsausbeute zu gewährleisten. Die Wahl der Gasflüsse entsprechend Beziehung (2) stellt sicher, dass in jedem Fall die relativen Taperverluste kleiner als 20% der Vorformlänge bleiben (obere Grenze) und die Flussbedingungen Abscheideraten entsprechen, die eine Taperreduzierung aus Gründen der Verfahrensökonomie notwendig machen. Ferner ist es zweckmässig, den totalen Gasfluss auf $\dot{Q}_T \geqq 1000$ sccm und den Chloridgasfluss auf $\dot{Q}_{SiCl_4} \geqq 185$ sccm (entsprechend einer Abscheiderate $\dot{m}_{SiO_2} = 0,5$ g/min) einzustellen, da bei niedrigeren Fluss- bzw. Abscheideraten in der Regel die Taperverluste auch ohne Anwendung der erfindungsgemässen Massnahme ausreichend klein sind.

Die Hublänge des Plasmas ist vorzugsweise kleiner als oder gleich 300 cm. Grössere Hublängen sind aus technischen Gründen (Rohrdeformationen beim Beschichten und Kollabieren, Abmessungen der Beschichtungsapparaturen, Hantierbarkeit der Vorformen) nur mit grossen Schwierigkeiten anwendbar.

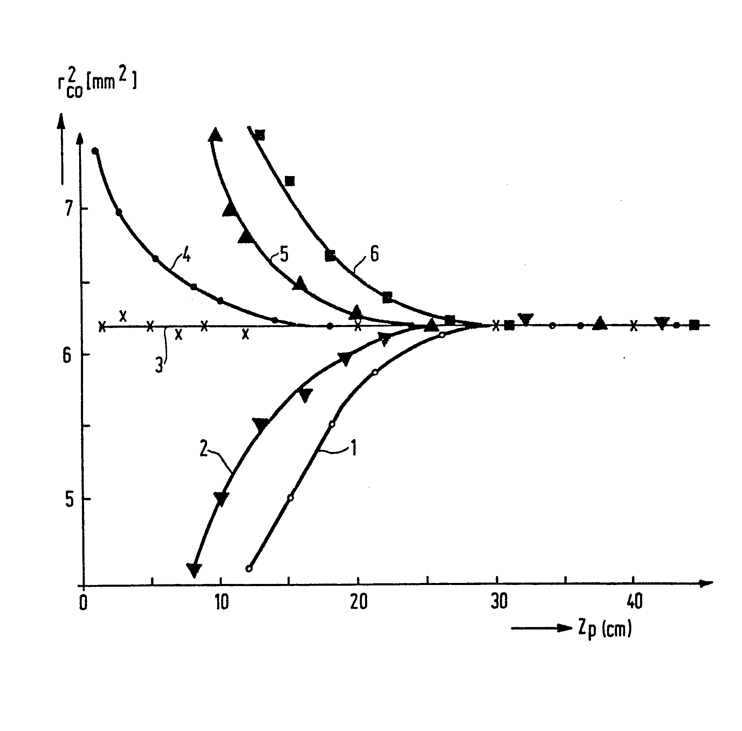

Die Erfindung wird im nachfolgenden anhand einer Zeichnung und einiger Beispiele näher erläutert. Die einzige Figur der Zeichnung zeigt ein Diagramm, das optische Vermessungsergebnisse an Vorformen darstellt.

Bei allen Ausführungsformen wurden mit dem PVCD-Verfahren Vorformen mit einem Stufenindexprofil im Kernbereich hergestellt; alle Abscheidungsbedingungen bis auf die Unterbrechungsdauer wurden konstant gehalten. Im einzelnen wurden Quarzglasrohre (23 x 20 mm) verwendet; die Resonatorgeschwindigkeit betrug im konstanten Bereich über einer Hublänge von 70 cm 11,7 cm s$^{-1}$ und wurde an den Endpunkten über einer Rampenlänge von jeweils 1,2 cm auf Null verzögert und in Rückrichtung in gleicher Form auf den Sollwert beschleunigt. Die Gasflüsse blieben während der gesamten Abscheidungsdauer mit $\dot{Q}_{O_2} = 1795$ sccm, $\dot{Q}_{SiCl_4} = 323$ sccm und $\dot{Q}_{GeCl_4} = 36$ sccm konstant, was einer Abscheiderate von etwa 1,0 g.min$^{-1}$ entsprach. Die übrigen PCVD-Parameter wurden ebenfalls auf für diese Abscheiderate optimierten Werte konstant gehalten; die Substrattemperatur betrug 1220°C, der Abscheidungsdruck etwa 16 hPa und die eingekoppelte Mikrowellenleistung etwa 2.0 kW. Die totale Zahl der abgeschiedenen Lagen von etwa 470 entsprach dabei einer effektiven totalen Abscheidungsdauer zwischen 45 und 70 min je nach Unterbrechungsdauer.

Die Glasrohre wurden nach der Abscheidung kollabiert und anschliessend mit einem P101-Performanalyser (Fa. Yorck Technology) bezüglich der Kerngeometrie (Radius $r_{co}$) und der optischen Brechungsindexdifferenz zwischen abgeschiedenem Kernmaterial und SiO$_2$-Substratrohr als Funktion der Hublänge $z_p$ vermessen. Die Vermessungsergebnisse sind in der Zeichnung graphisch dargestellt. Bei dieser Art der Messung können simultan die Lage der Abscheidung mit Bezug auf das Resonatorzentrum (bzw. die Umkehrpunkte), die geometrische Massenbelegung und der optische Brechungsindex längs der Vorform bestimmt werden. Die folgenden Resultate und Ausführungsbeispiele zeigen im wesentlichen nur den geometrischen Anfangstaper bzw. die Wirkung des erfindungsgemässen Verfahrens auf die Reduktion des Taperbereichs. Die Übereinstimmung der berechneten Werte für den Kernradius mit den experimentell gemessenen Kernradien bestätigte, dass die Verfahrensausbeute in allen Ausführungsbeispielen quantitativ war.

*Ausführungsbeispiele*

Die PCVD-Abscheidung lieferte unter den oben angegebenen Bedingungen ohne Anwendung einer Unterbrechung einen geometrischen Anfangstaper mit einer Länge von etwa 17 bis 18 cm ($\triangle t_o$ = 0,0 s, Fig., Kurve 1).

Bei Anwendung einer Unterbrechung von 0,8 s im vorderen Umkehrpunkt ergab sich eine Verminderung des geometrischen Anfangstapers auf etwa 14 cm ($\triangle t_o$ = 0,8 s, Fig., Kurve 2).

Bei Anwendung einer Unterbrechung von 1,6 s war der Anfangstaper auf eine Länge von weniger als 2 cm vermindert ($\triangle t_o$ = 1,6 s, Fig., Kurve 3). Aus Beziehung (1) ergibt sich für die angegebenen PCVD-Bedingungen ein Wert von

$$1,6 \text{ s} = \triangle t_o = 0,009 \left[ \frac{\dot{Q}_T/\text{sccm}}{v_o/\text{cm s}^{-1}} \right]$$

Bei Anwendung einer Unterbrechung von 1,7 s ist das Schichtdickendefizit, das ohne Unterbrechung im Anfangsbereich auftritt, bereits überkompensiert. Ein Wert von 110% der Plateauschichtdicke (Schichtdicke im Plateaubereich) wird bei einem Abstand vom vorderen Umkehrpunkt von 4 cm erreicht ($\triangle t_o$ = 1,7 s, Fig., Kurve 4). Dieser Wert von 4 cm kann analog zum Fall bei Schichtdickendefizit als Anfangstaper bezeichnet werden, dessen Länge gegenüber dem unkompensierten Wert von 17 bis 18 cm noch deutlich vermindert ist.

Bei noch längeren Unterbrechungen von 2,1 und 3,1 s ($\triangle t_o$ = 2,1 s und 3,1 s, Fig., Kurven 5 und 6) tritt die Überkompensation entsprechend stärker auf, was zu weiter ansteigenden Anfangstaperlängen von 12 cm bzw. 16 cm führt.

**Patentansprüche**

1. Verfahren zur Herstellung von Lichtleitfasern, bei dem auf der Innenwandung eines auf eine Temperatur zwischen 1100 und 1300°C erwärmten Glasrohrs schichtweise Glas abgeschieden wird, indem ein reaktives Gasgemisch bei einem Druck zwischen 1 und 30 hPa von einer Gaseintrittsseite aus durch das Glasrohr geleitet wird, während im Innern des Glasrohrs ein Plasma zwischen zwei Umkehrpunkten hubweise hin- und herbewegt wird, wonach das Glasrohr, nachdem eine dem beabsichtigten Lichtleitfaseraufbau entsprechende Menge Glas abgeschieden worden ist, zum Kollabieren gebracht wird, um eine massive Vorform zu bilden, von der Lichtleitfasern gezogen werden, dadurch gekennzeichnet, dass die Hin- und Herbewegung des Plasmas am Umkehrpunkt auf der Gaseintrittsseite unterbrochen wird, wobei die Dauer dieser Unterbrechung für eine effektive Reduktion von Anfangstaperverlusten bemessen wird.

2. Verfahren nach Anspruch 1, dadurch gekennzeichnet, dass die Dauer der Unterbrechung mindestens 0,1 s beträgt.

3. Verfahren nach Anspruch 1, bei dem zur Erzeugung des Plasmas ein Mikrowellenresonator verwendet wird, dadurch gekennzeichnet, dass die Bewegung des Mikrowellenresonators am Umkehrpunkt auf der Gaseintrittsseite für ein Zeitintervall $\triangle t_o$ entsprechend der Beziehung

$$0,008 \cdot \left[ \frac{\dot{Q}_T/\text{sccm}}{v_o/\text{cm s}^{-1}} \right] \leqq \left[ \frac{\triangle t_o}{\text{s}} \right] \leqq 0,01 \cdot \left[ \frac{\dot{Q}_T/\text{sccm}}{v_o/\text{cm s}^{-1}} \right] \quad (1)$$

unterbrochen wird, wobei

$\dot{Q}_T$ der totale Gasfluss in sccm (Kubikzentimeter pro Minute, bezogen auf Standardbedingungen von 273 K und 1013 hPa) und

$v_o$ die Resonatorgeschwindigkeit im Plateaubereich in Zentimeter pro Sekunde

bedeuten.

4. Verfahren nach Anspruch 1, 2 oder 3, dadurch gekennzeichnet, dass das Plasma im Bereich des Umkehrpunktes zeitlich nichtlinear und/oder in seiner Ausdehnung in Längsrichtung des Glasrohrs zeitlich verändert wird.

5. Verfahren nach Anspruch 4, dadurch gekennzeichnet, dass der Bereich, in dem das Plasma nichtlinear bewegt wird, weniger als 2% der gesamten Hublänge entspricht, wobei unter «Hublänge» die Strecke zwischen den Umkehrpunkten des Plasmas zu verstehen ist.

6. Verfahren nach Anspruch 1 oder 4, dadurch gekennzeichnet, dass bei einer vorgegebenen Hublänge für das Plasma die Gasflüsse entsprechend der Beziehung

$$2,65 \leqq \left[ \frac{\dot{Q}_T}{\dot{Q}_{SiCl_4}} \right] \cdot \left[ \frac{\dot{m}_{SiO_2}}{\text{g/min}} \right] \leqq 7,25 \left[ \frac{z_p}{\text{m}} \right] \quad (2)$$

eingestellt werden, wobei

$\dot{Q}_T$ und $\dot{Q}_{SiCl_4}$ den totalen Gasfluss und den Gasfluss von SiO$_2$-bildenden Chloriden in sccm,

$\dot{m}_{SiO_2}$ die Abscheiderate von SiO$_2$ in Gramm pro Minute und

$z_p$ die Hublänge in m

bedeuten und $\dot{Q}_T$ im Gültigkeitsbereich der Beziehung (2) so niedrig wie möglich gewählt wird.

7. Verfahren nach Anspruch 6, dadurch gekennzeichnet, dass der totale Gasfluss $\dot{Q}_T \geqq 1000$ sccm ist.

8. Verfahren nach Anspruch 6, dadurch gekennzeichnet, dass der Gasfluss $\dot{Q}_{SiCl_4} \geqq 185$ sccm (entsprechend einer Abscheiderate $\dot{m}_{SiO_2} \geqq 0,5$ g/min) ist.

9. Verfahren nach Anspruch 6, dadurch gekennzeichnet, dass die Hublänge $z_p$ des Plasmas kleiner als oder gleich 300 cm ist.

**Claims**

1. A method of manufacturing light-conducting fibres, in which layers of glass are deposited on the inner wall of a glass tube heated at a temperature between 1100 and 1300°C by passing a reactive gas mixture from a gas inlet side through the glass tube at a pressure between 1 and 20 hPa while in the interior of the glass tube a plasma is reciprocated strokewise between two reversal points, the glass tube being collapsed to form a solid preform from which optical fibres are drawn after a quantity of glass has been deposited corresponding to the intended optical fibre construction, characterized in that the reciprocating movement of the plasma is interrupted at the reversal point on the gas inlet side, the duration of said interruption being proportioned so as to be sufficient for an effective reduction of entrance taper losses.

2. A method as claimed in Claim 1, characterized in that the duration of the interruption is at least 0.1 s.

3. A method as claimed in Claim 1, in which a microwave resonator is used for the production of the plasma, characterized in that the movement of the microwave resonator at the reversal point at the gas inlet side is interrupted for a time interval $\triangle t_0$ corresponding to the relationship.

$$0.008 \cdot \left[ \frac{\dot{Q}_T/sccm}{v_0/cm \; s^{-1}} \right] \leqq \left[ \frac{\triangle t_0}{s} \right] \leqq 0.01 \cdot \left[ \frac{\dot{Q}_T/sccm}{v_0/cm \; s^{-1}} \right] \quad (1)$$

in which

$\dot{Q}_T$ is the overall gas flow in sccm (cubic centimetre per minute related to standard conditions of 273K and 1013 hPa) and

$v_0$ is the resonator velocity in the plateau region in centimetres per second.

4. A method as claimed in Claim 1, 2 or 3, characterized in that the plasma at the area of the reversal point is varied non linearly as a function of time and/or its extension in the longitudinal direction of the glass tube is varied as a function of time.

5. A method as claimed in Claim 4, characterized in that the area in which the plasma is moved nonlinearly corresponds to less than 2% of the overall stroke length, «stroke length» being the travel between the reversal points of the plasma.

6. A method as claimed in Claim 1 or 4, characterized in that with a previously given plasma stroke length, the gas flows are adjusted in accordance with the relationship

$$2.65 \leqq \left[ \frac{\dot{Q}_T}{\dot{Q}_{SiCl_4}} \right] \cdot \left[ \frac{\dot{m}_{SiO_2}}{g/min} \right] \leqq 7.25 \left[ \frac{z_p}{m} \right] \quad (2)$$

in which

$\dot{Q}_T$ and $\dot{Q}_{SiCl_4}$ are the overall gas flow and the gas flow of $SiO_2$-forming chlorides in sccm,

$\dot{m}_{SiO_2}$ is the deposition rate of $SiO_2$ in grams per minute,

$z_p$ is the stroke length in m, and

$\dot{Q}_T$ in the validity range of the relationship (2) is chosen to be as small as possible.

7. A method as claimed in Claim 6, characterized in that the overall gas flow $\dot{Q}_T \geqq 1000$ sccm.

8. A method as claimed in Claim 6, characterized in that the gas flow $\dot{Q}_{SiCl_4} \geqq 185$ sccm (corresponding to a deposition rate $\dot{m}_{SiO_2} \geqq 0.5$ g/min.

9. A method as claimed in Claim 6, characterized in that the stroke length $z_p$ of the plasma is smaller than or equal to 300 cm.

## Revendications

1. Procédé pour la fabrication de fibres optiques, selon lequel du verre est déposé en couche sur la paroi intérieure d'un tube en verre chauffé à une température comprise entre 1100 et 1300°C, du fait qu'un mélange gazeux réactif traverse le tube en verre sous une pression comprise entre 1 et 30 hPa à partie d'un côté d'entrée de gaz, alors que dans le tube en verre un plasma est animé de mouvements de va-et-vient par coups entre deux points d'inversion, après quoi le tube en verre, après dépôt d'une quantité de gaz correspondant à la structure de la fibre optique envisagée, est porté à affaissement afin de former une préforme massive à partir de laquelle sont étirées des fibres optiques, caractérisé en ce que le mouvement de va-et-vient du plasma est interrompu au point d'inversion du côté d'entrée de gaz, la durée de cette interruption étant mesurée afin de réaliser une réduction efficace des pertes de conicité initiales.

2. Procédé selon la revendication 1, selon lequel un résonateur de micro-ondes est utilisé pour la production du plasma, caractérisé en ce que le déplacement du résonateur de micro-ondes au point d'inversion du côté d'entrée de gaz est interrompu pour un intervalle de temps $\triangle t_0$ conformément à la relation

$$0,008 \cdot \left[ \frac{\dot{Q}_T/sccm}{v_0/cm \; s^{-1}} \right] \leqq \left[ \frac{\triangle t_0}{s} \right] \geqq 0,01 \cdot \left[ \frac{\dot{Q}_T/sccm}{v_0/cm \; s^{-1}} \right] \quad (1)$$

$\dot{Q}_T$ étant le courant de gaz total en sccm (centimètre cube par minute rapporté aux conditions normalisées de 273 K et de 1013 hPa) et

$v_0$ étant la vitesse du résonateur dans la zone du plateau en centimètre par seconde.

4. Procédé selon la revendication 1, 2 ou 3, caractérisé en ce que le plasma varie temporairement non-linéairement dans la portée du point d'inversion et/ou le fait temporairement pendant son expansion dans la direction longitudinale du tube en verre.

5. Procédé selon la revendication 4, caractérisé en ce que la portée dans laquelle le plasma déplacé de façon non linéaire correspond à moins de 2% de la longueur de coup totale, par laquelle il y a lieu d'entendre le trajet compris entre les points d'inversion du plasma.

6. Procédé selon la revendication 1 ou 4, caractérisé en ce que dans le cas d'une longueur de coupe déterminée pour le plasma, les courants de gaz sont établis conformément à la réaction

$$2,65 \leqq \left[ \frac{\dot{Q}_T}{\dot{Q}_{SiCl_4}} \right] \cdot \left[ \frac{\dot{m}_{SiO_2}}{g/min} \right] \leqq 7,25 \left[ \frac{z_p}{m} \right] \quad (2)$$

$\dot{Q}_T$ et $\dot{Q}_{SiCl_4}$ étant le courant de gaz total et le courant de gaz de chlorures formateurs de $SiO_2$ en sccm,

$\dot{m}_{SiO_2}$ étant la vitesse de dépôt de $SiO_2$ en gramme par minute et

$z_p$ étant la longueur de coup en m et $\dot{Q}_T$ étant choisi aussi bas que possible dans la portée de validité de la relation(2).

7. Procédé selon la revendication 6, caractérisé en ce que le courant de gaz total $\dot{Q}_T \geqq$ 1000 sccm.

8. Procédé selon la revendication 6, caractérisé en ce que le courant de gaz $\dot{Q}_{SiCl4} \geqq$ est de 185 sccm (conformément à une vitesse de dépôt $\dot{m}_{SiO2} \geqq$ 0,5 g/min).

9. Procédé selon la revendication 6, caractérisé en ce que la longueur de coup $z_p$ du plasma inférieure ou égale à 300 cm.